# EUROPÄISCHE PATENTSCHRIFT

(11) **EP 0 848 669 B1**
(45) Veröffentlichungstag und Bekanntmachung des Hinweises auf die Patenterteilung: **12.04.2000**
(21) Anmeldenummer: 97932738.4
(22) Anmeldetag: 03.07.1997
(51) Int. Cl.: B60B 33/00, B62B 3/14

(54) **FAHRGESTELL FÜR EINEN VON HAND BEWEGBAREN TRANSPORTWAGEN**
CHASSIS FOR A MANUALLY DISPLACEABLE CART
CHASSIS POUR UN CHARIOT DE TRANSPORT DEPLACEABLE MANUELLEMENT

(30) Priorität: 04.07.1996 DE 19626995
(43) Veröffentlichungstag der Anmeldung: 24.06.1998
(73) Patentinhaber: WANZL METALLWARENFABRIK GMBH, D-89336 Leipheim (DE)
(72) Erfinder: BLAHA, Martin, D-89335 Ichenhausen (DE)
(86) Internationale Anmeldenummer: DE9701416
(87) Internationale Veröffentlichungsnummer: WO9801308

(56) Entgegenhaltungen:
- EP-A- 0 432 515
- DE-A- 3 410 536
- DE-A- 4 141 130
- DE-B- 2 543 211
- FR-A- 2 581 933
- US-A- 4 057 872

## Beschreibung

Die Erfindung betrifft ein Fahrgestell für einen von Hand bewegbaren Transportwagen, insbesondere für einen Einkaufswagen, mit einem von oben betrachtet trapezförmigen, wenigstens drei Fahrrollen tragenden Grundrahmen, dessen längere parallele Seite fehlt und von dessen rückwärtigem Bereich und an beiden Längsseiten zum Aufsetzen eines Korbes oder Behälters bestimmte Träger nach oben streben und der Grundrahmen im wesentlichen durch wenigstens zwei übereinander angeordnete Drähte gebildet ist, die durch Zwischenstücke und/oder durch in den Drähten befindliche Wölbungen miteinander verschweißt sind und bei dem die Träger mit ihren nach unten weisenden Enden die übereinander angeordneten Drähte kreuzen, wobei ferner im rückwärtigen Bereich am unten liegenden Draht des Grundrahmens und an beiden Längsseiten je eine nach außen gerichtete Schlaufe zur Aufnahme je einer Fahrrolle angeformt sind, und am Grundrahmen zu beiden Seiten der Schlaufen zwischen dem Grundrahmen und den Fahrrollen Distanzplatten angeordnet sind, die sowohl einen vertikalen Durchbruch zur Aufnahme eines für die Befestigung einer Fahrrolle bestimmten Befestigungsmittels aufweisen, als auch mit Stützflächen ausgestattet sind, die sich an Vorsprüngen, gebildet durch die Zwischenstücke und die nach unten weisenden Enden, horizontal abstützen, wobei die Distanzplatten durch die für die Befestigung der Fahrrollen bestimmten Befestigungsmittel am Grundrahmen ortsfest gehalten sind.

Ein Fahrgestell gemäß dem Oberbegriff des Anspruchs 1 ist in der DE 41 41 130 A1 beschrieben. Die bei diesem Fahrgestell verwendeten Distanzplatten weisen einen Grundriß auf, der an den Großbuchstaben H erinnert, wobei zentral eine Bohrung zur Aufnahme eines Befestigungsmittels vorgesehen ist. Durch die H-förmige Gestalt sind zwei Stützflächen gebildet, die zur Aufnahme der am Fahrgestell befindlichen Vorsprünge bestimmt sind. Die Stützflächen bestehen aus zwei parallelen Teilflächen, die durch eine halbkreisförmige Teilfläche verbunden sind. Dadurch lassen sich die Distanzplatten bei ihrer Montage entlang der Vorsprünge in vertikaler, nicht aber in horizontaler Richtung bewegen. Dies ist erforderlich, damit die Distanzplatten mit Hilfe der Befestigungsmittel unter Führung an den Vorsprüngen gegen die am Fahrgestell befindlichen Schlaufen verspannt werden können und dadurch eine ortsfeste Arretierung der Fahrrollen am Fahrgestell möglich ist.

Wie eingangs erwähnt, ist das Fahrgestell für Transportwagen, insbesondere aber für Einkaufswagen vorgesehen. Einkaufswagen sind Massenartikel, bei denen bereits geringe, ein Bauteil betreffende Kostenreduzierungen, auf die Gesamtmenge der Einkaufswagen bezogen, beachtliche Kosteneinsparungen bewirken.

Die Aufgabe der Erfindung besteht darin, bei einem Fahrgestell der eingangs genannten Art die Distanzplatten so zu verändern, daß bei unveränderter Zuverlässigkeit der Fahrrollenbefestigung eine Reduzierung der Herstellkosten für die Distanzplatten erzielbar ist.

Die Lösung der Aufgabe besteht darin, daß jede Stützfläche der Distanzplatten Winklig ausgebildet ist, wobei der eingeschlossene Winkel kleiner 180° ist.

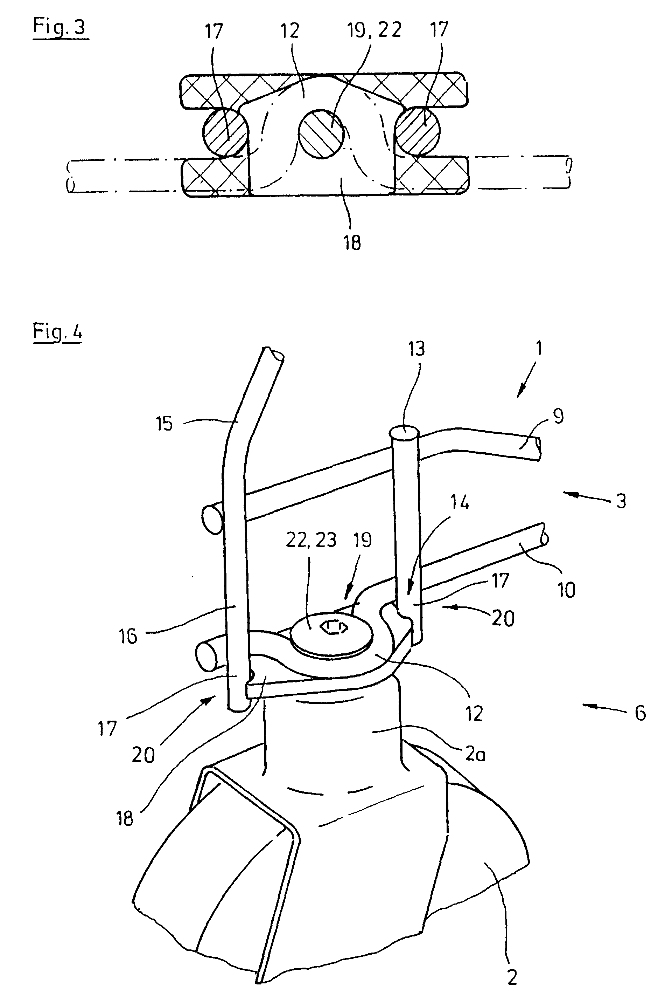

Durch diese zweckmäßige Gestaltung läßt sich die Größe der Distanzplatten im Vergleich zu den Distanzplatten des bisherigen Standes der Technik erheblich verkleinern, siehe auch Fig. 3. Dadurch ist eine Reduzierung der Fertigungskosten garantiert. Ein weiterer Vorteil ergibt sich, daß es möglich ist, eine Fahrrolle, eine Distanzplatte sowie das oder die erforderlichen Befestigungsmittel so weit vorzumontieren, daß diese in gegeneinander bewegbarem, jedoch nicht mehr lösbaren Zustand, in horizontaler Richtung auf die Vorsprünge aufgesetzt und an einer Schlaufe anliegend, in kürzester Zeit als Baueinheit am Fahrgestell ortsfest befestigbar sind. Dadurch läßt sich auch eine Reduzierung der Montagezeiten für die Fahrrollen erzielen.

Die Erfindung wird anhand eines Ausführungsbeispieles näher erläutert. Es zeigt
Fig. 1 ein Fahrgestell;
Fig. 2 eine erfindungsgemäße neue Distanzplatte;
Fig. 3 einen Größenvergleich zwischen bisheriger und neuer Distanzplatte sowie
Fig. 4 im Detail die Art der Befestigung einer im rückwärtigen Bereich des Fahrgestelles befindlichen Fahrrolle.

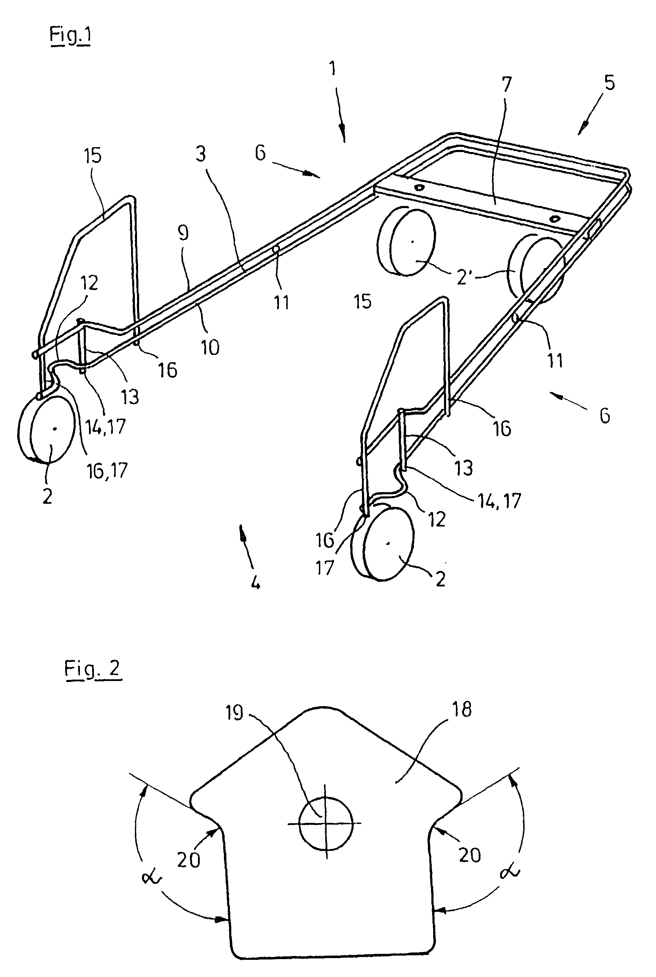

Fig. 1 zeigt ein Fahrgestell 1 mit einem von oben betrachtet trapezförmigen Grundrahmen 3, dessen rückwärtige längere parallele Seite fehlt. Der Grundrahmen 3 ist in bekannter Weise deshalb trapezförmig gestaltet, um mit diesem Grundrahmen 3 ausgestattete Transportwagen platzsparend ineinanderschieben zu können. Der Grundrahmen 3 trägt wenigstens drei Fahrrollen 2, 2', wobei zwei Fahrrollen 2 im rückwärtigen Bereich 4 und mindestens eine Fahrrolle 2' im vorderen Bereich 5 des Grundrahmens 3 und damit des Fahrgestelles 1 vorgesehen sind. In ebenfalls bekannter Weise ist der Grundrahmen 3 bevorzugt aus wenigstens zwei übereinander angeordneten Drähten 9, 10 gebildet, die gewöhnlich durch stab- oder kugelförmige Distanzstükke 11 zu einem Bauteil zusammengeschweißt sind, wobei die durch die Drähte 9, 10 gebildeten Längsseiten 6 im vorderen Bereich 5 des Grundrahmens 3 durch wenigstens ein Querstück 7 verbunden sind, dessen Anordnung ebenfalls bekannt ist und das zum Tragen der wenigstens einen vorderen Fahrrolle 2' bestimmt ist. Anstelle von Distanzstücken 11 können die Drähte 9 und 10 in bekannter Weise mit Wölbungen ausgestattet sein, mit Hilfe derer die Drähte 9, 10 miteinander widerstandsverschweißt sind. Im rückwärtigen Bereich 4 des Grundrahmens 3 und ausgehend von beiden Längsseiten 6 streben je ein Träger 15 nach oben, die in bekannter Weise zum Tragen eines Korbes oder Behälters bestimmt sind. Die Träger 15 können die verschiedensten zweckmäßigen Formen aufweisen, so daß an dieser Stelle auf eine nähere Beschreibung verzichtet wird. Wichtig ist allerdings, daß die nach unten weisenden Enden 16 der Träger 15 die beiden Drähte 9, 10 des Grundrahmens 3 kreuzen und mit diesen durch Widerstandsschweißung verbunden sind. Im rückwärtigen Bereich 4 des Grundrahmens 3 und an dessen beiden Längsseiten 6 sind am unteren Draht 10 je eine nach außen gerichtete Schlaufe 12 angeformt. In der Zeichnung führt von jeder Schlaufe 12 ein nach unten gerichtetes Ende 16 der Träger 15 vorbei. Rechts von jeder Schlaufe 12 ist je ein stabförmiges Zwischenstück 13 vorgesehen, wobei jedes Zwischenstück 13 mit den beiden Drähten 9, 10 durch Widerstandsschweißung verbunden ist. Die ein wenig über den unteren Draht 10 nach unten hinausstehenden freien Enden 14 der Zwischenstücke 13 bilden ebenso wie die nach unten über den unteren Draht 10 geringfügig hinausstehenden Enden 16 der Träger 15 Vorsprünge 17, auf deren Funktion in der Beschreibung zu Fig. 3 noch näher hingewiesen wird. Anstelle von nur einem unteren Draht 10 können beispielsweise auch zwei untere Drähte 10 vorgesehen sein, die an der Stirnseite des Grundrahmens 3 durch einen Zwischenraum getrennt, spiegelbildlich angeordnet sein können.

Fig. 2 zeigt eine Distanzplatte 18, wie sie für die Erfindung benötigt wird. Die bevorzugt aus Flachstahl ausgestanzte Distanzplatte 18 weist einen grob pfeilförmigen Grundriß auf, wobei in etwa zentrisch ein zylindrischer Durchbruch 19 vorgesehen ist. Die Distanzplatte 18 weist an zwei parallelen Seiten je eine winklige Stützfläche 20 auf, wobei jede Stützfläche 20 in Draufsicht betrachtet einen Winkel α kleiner 180° einschließt. Die Stützflächen 20 sind zur Anlage an den Vorsprüngen 17 des Grundrahmens 3 des Fahrgestelles 1 bestimmt, siehe Fig.3.

Vergleichend zeigt Fig. 3 eine Distanzplatte gemäß der DE 41 41 130 A1 (Stand der Technik) sowie eine erfindungsgemäße Distanzplatte 18. Eingezeichnet sind ferner zwei Vorsprünge 17 sowie der Verlauf einer Schlaufe 12. Der Durchbruch 19 ist bei beiden Distanzplatten 18 deckungsgleich und im Schnitt ist der Schaft des Befestigungsmittels 22 dargestellt. Kreuzschraffiert sind jene Bereiche der Distanzplatte nach der DE 41 41 130 A1 dargestellt, die bei der erfindungsgemäßen Distanzplatte 18 nicht mehr benötigt werden. Letztere ist wesentlich kleiner, so daß sich aufgrund der Materialreduzierung pro Distanzplatte 18 eine Kostenersparnis ergibt. Auch das Stanzwerkzeug zur Herstellung der Distanzplatten 18 kann kleiner gehalten werden. Die Abstützung der Distanzplatte 18 in horizontaler Richtung (in der Zeichnung ist dies die Blattebene) erfolgt mit den beiden Stützflächen 20, die an den Vorsprüngen 17 abgestützt sind und über den Durchbruch 19 der am Schaft des Befestigungsmittels 22 anliegt. Die Distanzplatte 18 läßt sich in dieser Lage weder drehen noch verschieben.

Im Detail zeigt Fig. 4 die Befestigung einer als Lenkrolle gestalteten Fahrrolle 2 an der hinteren rechten Längsseite 6 des Fahrgestelles 1. Dargestellt sind ausschnittweise ein Teil des Trägers 15 sowie der obere und untere Draht 9, 10 des Grundrahmens 3. Ersichtlich ist ferner das Zwischenstück 13, die Schlaufe 12, die Distanzplatte 18, ein Teil eines Befestigungsmittels 22 sowie die Fahrrolle 2. Die durch die nach unten gerichteten Enden 16, 14 des Trägers 15 und des Zwischenstückes 13 gebildeten und zu beiden Seiten der Schlaufe 12 befindlichen Vorsprünge 17 sind in Kontakt mit den Stützflächen 20 der Distanzplatte 18. Die Distanzplatte 18 liegt an der Unterseite der Schlaufe 12 an. An der Unterseite der Distanzplatte 18 wiederum liegt die Fahrrolle 2 mit ihrem Kopf 2a plan an.

Es gibt zwei Möglichkeiten, eine Fahrrolle 2 am Grundrahmen 3 des Fahrgestelles 1 zu montieren. Bei der ersten Möglichkeit wird zunächst die Distanzplatte 18 an die Unterseite der Schlaufe 12 so angelegt, daß der Durchbruch 19 der Distanzplatte 18 zentrisch zur Schlaufe 12 angeordnet ist. Anschließend wird das Befestigungsmittel 22, im Beispiel ist es eine Schraube mit großem, auf der Schlaufe 12 aufliegendem pilzförmigen Kopf 23 mit ihrem nicht näher dargestellten Schaft durch die Schlaufe 12 und durch den Durchbruch 19 der Distanzplatte 18 hindurchgeführt. Dann wird die Fahrrolle 2 mit ihrem Kopf 2a von unten her plan an die Unterseite der nunmehr lose eingefügten Distanzplatte 18 angelegt, das Befestigungsmittel 22 durch die zentrische Haltebohrung im Kopf 2a der Fahrrolle 2 hindurchgeführt und anschließend durch Aufschrauben eines im Kopf 2a der Fahrrolle 2 eingeführten weiteren Befestigungsmittel, z.B. einer Sechskantmutter, gesichert. Sowohl die Distanzplatte 18, als auch die als Lenkrolle gestaltete Fahrrolle 2 sind nunmehr ortsfest an den Grundrahmen 3 des Fahrgestelles 1 angeschraubt.
Eine zweite, wie auch eingangs angedeutete Möglichkeit besteht darin, die Fahrrolle 2, die Distanzplatte 18 sowie die Befestigungsmittel 22 gebrauchsfertig so vorzumontieren, daß die so gestaltete Baueinheit, an der Schlaufe 12 positioniert, anschließend durch Festziehen des oder der Befestigungsmittel 22 am Grundrahmen 3 des Fahrgestelles 1 befestigbar ist. In entsprechender Weise gilt gleiches auch für die an der linken Längsseite 6 des Grundrahmens 3 befindliche hintere Fahrrolle 2. Sowohl die als Lenkrollen gestalteten Fahrrollen 2, als auch die erforderlichen Befestigungsmittel 22 können z.B. so gestaltet sein, wie dies in der DE 25 43 211.5 vorgeschlagen wird.
Der Begriff "Schlaufe" für eine Drahtauswölbung entstammt der in der Drahtfertigung üblichen Fachsprache.

## Patentansprüche

1. Fahrgestell (1) für einen von Hand bewegbaren Transportwagen, insbesondere für einen Einkaufswagen, mit einem von oben betrachtet trapezförmigen, wenigstens drei Fahrrollen (2, 2') tragenden Grundrahmen (3), dessen längere parallele Seite fehlt und von dessen rückwärtigem Bereich (4) und an beiden Längsseiten (6) zum Aufsetzen eines Korbes oder Behälters bestimmte Träger (15) nach oben streben und der Grundrahmen (3) im wesentlichen durch wenigstens zwei übereinander angeordnete Drähte (9, 10) gebildet ist, die durch Zwischenstücke (13) und/oder durch in den Drähten (9, 10) befindliche Wölbungen miteinander verschweißt sind und bei dem die Träger (15) mit ihren nach unten weisenden Enden (16) die übereinander angeordneten Drähte (9, 10) kreuzen, wobei ferner im rückwärtigen Bereich (4) am unten liegenden Draht (10) des Grundrahmens (3) und an beiden Längsseiten (6) je eine nach außen gerichtete Schlaufe (12) zur Aufnahme je einer Fahrrolle (2, 2') angeformt sind, und am Grundrahmen (3) zu beiden Seiten der Schlaufen (12) zwischen dem Grundrahmen (3) und den Fahrrollen (2) Distanzplatten (18) angeordnet sind, die sowohl einen vertikalen Durchbruch (19) zur Aufnahme eines für die Befestigung einer Fahrrolle (2, 2') bestimmten Befestigungsmittels (22) aufweisen, als auch mit Stützflächen (20) ausgestattet sind, die sich an Vorsprüngen (17), gebildet durch die Zwischenstücke (13) und die nach unten weisenden Enden (16), horizontal abstützen, wobei die Distanzplatten (18) durch die für die Befestigung der Fahrrollen (2, 2') bestimmten Befestigungsmittel (22) am Grundrahmen (3) ortsfest gehalten sind, dadurch **gekennzeichnet**, daß jede Stützfläche (20) der Distanzplatten (18) winklig ausgebildet ist, wobei der eingeschlossene Winkel (α) kleiner 180° ist.

2. Fahrgestell (1) nach Anspruch 1, dadurch **gekennzeichnet**, daß die Distanzplatten (18) einen pfeilförmigen Grundriß aufweisen.

3. Fahrgestell (1) nach Anspruch 1 oder 2, dadurch **gekennzeichnet**, daß die Abstützung einer jeden Distanzplatte (18) in horizontaler Richtung mit den beiden Stützflächen (20), die an den Vorsprüngen (17) abgestützt sind und über den Durchbruch (19), der am Schaft des Befestigungsmittels (22) anliegt, erfolgt.

## Claims

1. A wheel frame (1) for a trolley, in particular for a shopping trolley, movable by hand, with a base frame (3) which is trapezoidal as viewed from above and supports at least three casters (2, 2') and the longer parallel side of which is absent and from the rear region (4) of which and on the two longitudinal sides (6) of which supports (15) intended for mounting a basket or container project upwards, and the base frame (3) is formed essentially by at least two wires (9, 10) which are arranged one above the other and are welded to one another by intermediate members (13) and/or by bulges present in the wires (9, 10) and in which the downwardly directed ends (16) of the supports (15) cross the wires (9, 10) arranged one above the other, wherein, in addition, a respective loop (12) directed outwards for receiving a respective caster (2, 2') is integrally formed in the rear region (4) on the bottom wire (10) of the base frame (3) and on the two longitudinal sides (6), and spacer plates (18) are arranged on the base frame (3) on both sides of the loops (12) between the base frame (3) and the casters (2), the spacer plates (18) both having a vertical opening (19) for receiving a fastening means (22) which is intended for fastening a caster (2, 2') and being provided with support faces (20) supported horizontally on projections (17) formed by the intermediate members (13) and the downwardly directed ends (16), wherein the spacer plates (18) are held stationary on the base frame (3) by the fastening means (22) intended for fastening the casters (2, 2'), **characterized in that** each support face (20) of the spacer plates (18) is angled, wherein the enclosed angle (α) is less than 180°.

2. A wheel frame (1) according to Claim 1, **characterized in that** the spacer plates (18) have an arrow-shaped outline.

3. A wheel frame (1) according to Claim 1 or 2, **characterized in that** each spacer plate (18) is supported in the horizontal direction by the two support faces (20), which are supported on the projections (17), and by way of the opening (19), which adjoins the shaft of the fastening means (22).

## Revendications

1. Châssis (1) pour un chariot de transport déplaçable à la main, notamment pour un chariot à provisions, avec un cadre de base (3) trapézoïdal en vue de dessus, portant au moins trois roulettes (2, 2') et dont le côté parallèle plus long est manquant, des montants (15), destinés à recevoir un panier ou récipient posé sur eux, s'étendant vers le haut depuis la région arrière (4) du cadre et sur les deux côtés longitudinaux (6), et le cadre de base (3) étant essentiellement formé par au moins deux tréfilés (9, 10) superposés, qui sont mutuellement assemblés avec soudage par des entretoises (13) et/ou des bombements présents dans les tréfilés (9, 10), et les montants (15) croisant par leurs extrémités (16) dirigées vers le bas les tréfilés superposés (9, 10), une boucle (12) respective dirigée vers l'extérieur, destinée à recevoir une roulette respective (2, 2'), étant en outre formée dans la région arrière (4) sur le tréfilé inférieur (10) du cadre de base (3), sur chacun des deux côtés longitudinaux (6), et des plaques d'écartement (18) étant disposées sur le cadre de base (3) de part et d'autre des boucles (12) entre le cadre de base (3) et les roulettes (2), plaques qui à la fois présentent un ajour vertical (19), pour recevoir un moyen de fixation (22) prévu pour fixer une roulette (2, 2'), et sont équipées de faces d'appui (20) qui s'appuient horizontalement sur des saillies (17) formées par les entretoises (13) et les extrémités (16) dirigées vers le bas, les plaques d'écartement (18) étant maintenues en position fixe sur le cadre de base (3) par les moyens de fixation (22) prévus pour fixer les roulettes (2, 2'), **caractérisé** en ce que chaque face d'appui (20) des plaques d'écartement (18) est réalisée angulaire, l'angle inclus (α) étant inférieur à 180°.

2. Châssis (1) selon la revendication 1, caractérisé en ce que les plaques d'écartement (18) présentent une forme de flèche en projection sur un plan horizontal.

3. Châssis (1) selon la revendication 1 ou 2, **caractérisé** en ce que le soutien de chaque plaque d'écartement (18) en direction horizontale s'effectue par les deux faces d'appui (20), qui sont appuyées sur les saillies (17), et au moyen de l'ajour (19) qui s'applique contre la tige du moyen de fixation (22).
